# EUROPEAN PATENT APPLICATION

(11) **EP 4 641 731 A1**
(43) Date of publication of application: **29.10.2025**
(21) Application number: 25165329.1
(22) Date of filing: 21.03.2025
(51) Int. Cl.: H01M 10/0525, H01M 50/103, H01M 50/15, H01M 50/176, H01M 50/533, H01M 50/536, H01M 50/548, H01M 50/553, H01M 50/342

(54) **BATTERY AND MOUNTED STRUCTURE THEREOF**

(30) Priority: 26.04.2024 JP 2024072091
(71) Applicant: Prime Planet Energy & Solutions, Inc., Chuo-ku, Tokyo 103-0022 (JP)
(72) Inventor: WATANABE, Daiki, Tokyo, 103-0022 (JP)
(74) Representative: Kuhnen & Wacker Patent- und Rechtsanwaltsbüro PartG mbB

(57) **Abstract**

In a battery (1), a case (100) has an outer surface and a gas-discharge valve (150), the outer surface including a first surface (120, 130) and a second surface (112A), the first surface (120, 130) extending in a direction of a plane including a first direction, the second surface (112A) being connected to one end portion of the first surface (120, 130) in the first direction, the second surface (112A) being substantially orthogonal to the first surface (120, 130), the gas-discharge valve (150) being provided at the second surface (112A). The electrode assembly (200) and a current collector (400) are joined at a first joining portion (411, 421), the current collector (400) and an electrode terminal (300) are joined at a second joining portion (431, 441), and at least one of the first joining portion (411, 421) and the second joining portion (431, 441) is eccentrically located on the second surface (112A) side in the first direction.

## Description

### CROSS REFERENCE TO RELATED APPLICATIONS

This nonprovisional application is based on Japanese Patent Application No. 2024-072091 filed on April 26, 2024 with the Japan Patent Office, the entire contents of which are hereby incorporated by reference.

### BACKGROUND OF THE INVENTION

### Field of the Invention

The present technology relates to a battery and a mounted structure thereof.

### Description of the Background Art

There has been conventionally known a battery in which an electrode assembly is accommodated in a case. Conventionally, a structure has been employed in which a portion of a case is fractured to discharge its content when a temperature of an electrode assembly is increased.

For example, Japanese Patent Laying-Open No. 2022-185087 discloses a structure in which an electrode terminal and a gas-discharge valve are provided at an upper surface (sealing plate) of a prismatic secondary battery.

The specification of U.S. Patent Publication No. 2023/0187770 illustrates a structure in which electrode terminals are provided at both side surfaces (sealing plates) of a housing of a prismatic secondary battery and a gas-discharge valve is provided at a bottom surface of the housing.

### SUMMARY OF THE INVENTION

From the viewpoint of improving reliability of a battery, it is required to suppress fracture at an unintended location when a temperature of an electrode assembly is increased. From this viewpoint, there is still room for improvement in conventional batteries.

An object of the present technology is to provide a battery having high reliability and a mounted structure thereof.

The present technology provides the following battery and the following mounted structure thereof.
[1] A battery comprising: an electrode assembly; and a case that accommodates the electrode assembly, wherein the case has an outer surface and a gas-discharge valve, the outer surface including a first surface and a second surface, the first surface extending in a direction of a plane including a first direction, the second surface being connected to one end portion of the first surface in the first direction, the second surface being substantially orthogonal to the first surface, the gas-discharge valve being provided at the second surface, the battery further comprising: an electrode terminal provided on an outer side with respect to the first surface of the case; and a current collector provided on an inner side with respect to the first surface of the case, wherein the electrode assembly and the current collector are joined at a first joining portion, the current collector and the electrode terminal are joined at a second joining portion, and at least one of the first joining portion and the second joining portion is eccentrically located on the second surface side in the first direction.
   It should be noted that, in the present technology, the expression "eccentrically located on the second surface side" is not limited to the case where the first joining portion or the second joining portion is located only on the second surface side with respect to the center in the first direction, and includes a case where a portion of the first joining portion or the second joining portion is located on the side opposite to the second surface but a portion (preferably 60% or more, more preferably 70% or more, further preferably 80% or more or 90% or more) thereof that is more than half of the area (projection area thereof onto the first surface) of the first joining portion or the second joining portion is located on the second surface side.
[2] The battery according to [1], wherein the gas-discharge valve is provided at only one location at a center of the second surface in a second direction substantially orthogonal to the first surface.
[3] The battery according to [1], wherein the electrode assembly has a main body portion and a tab portion protruding from the main body portion toward the first surface at an end portion of the electrode assembly in a second direction substantially orthogonal to the first surface, and the first joining portion is formed between the tab portion and the current collector.
[4] The battery according to [3], wherein the first joining portion is formed by laser welding.
[5] The battery according to [3] or [4], wherein the second joining portion is formed by swaging.
[6] The battery according to any one of [1] to [5], wherein the electrode assembly includes a positive electrode, a negative electrode stacked on the positive electrode, and a separator provided between the positive electrode and the negative electrode.
[7] The battery according to [6], wherein the outer surface of the case further includes a third surface connected to the other end portion of the first surface in the first direction and facing the second surface in the first direction, the separator is provided to protrude to the second surface side and the third surface side with respect to the positive electrode and the negative electrode in the first direction, and a protruding amount of the separator with respect to each of the positive electrode and the negative electrode in the first direction is larger on the second surface side than on the third surface side.
[8] The battery according to any one of [1] to [6], wherein the outer surface of the case further includes a third surface connected to the other end portion of the first surface in the first direction and facing the second surface in the first direction, and when a distance between the second surface and the third surface in the first direction is defined as H, the first joining portion is formed in a region at a distance of 1/10H or more and 4/10H or less from the second surface in the first direction.
[9] The battery according to any one of [1] to [8], wherein an electric conduction area at the first joining portion is smaller than an area that is 0.3 times as large as an electric conduction area of the current collector.
[10] The battery according to any one of [1] to [8], wherein an electric conduction area at the second joining portion is smaller than an area that is 0.2 times as large as an electric conduction area of the current collector.
[11] The battery according to any one of [1] to [10], wherein in the case, a thickness of a first plate-shaped portion constituting the first surface is larger than a thickness that is three times as large as a thickness of a second plate-shaped portion constituting the second surface.
[12] A mounted structure of the battery according to any one of [1] to [11], wherein the second surface of the case is disposed on a lower side.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a front view showing a configuration of a secondary battery according to one embodiment.
Fig. 2 is a diagram showing a state in which the secondary battery shown in Fig. 1 is viewed in a direction of arrow II.
Fig. 3 is a diagram showing a state in which the secondary battery shown in Fig. 1 is viewed in a direction of arrow III.
Fig. 4 is a diagram showing a state in which the secondary battery shown in Fig. 1 is viewed in a direction of arrow IV.
Fig. 5 is a diagram showing a state in which the secondary battery shown in Fig. 1 is viewed in a direction of arrow V.
Fig. 6 is a front cross sectional view of the secondary battery shown in Fig. 1.
Fig. 7 is a cross sectional view of a negative electrode plate.
Fig. 8 is a front view showing the negative electrode plate.
Fig. 9 is a cross sectional view of a positive electrode plate.
Fig. 10 is a front view showing the positive electrode plate.
Fig. 11 is a cross sectional view of the secondary battery shown in Fig. 1 along XI-XI.
Fig. 12 is a cross sectional view of the secondary battery shown in Fig. 1 along XII-XII.
Fig. 13 is a flowchart showing a method of manufacturing a secondary battery according to one embodiment.
Fig. 14 is a diagram schematically showing an exemplary arrangement of a first joining portion and a second joining portion in the secondary battery according to one embodiment.
Fig. 15 is a perspective view showing a first joining portion according to one example.
Fig. 16 is a perspective view showing a second joining portion according to one example.
Fig. 17 is a cross sectional view along XVII-XVII of Fig. 16.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "battery" is not limited to a lithium ion battery, and may include other batteries such as a nickel-metal hydride battery and a sodium-ion battery. In the present specification, the term "electrode" may collectively represent a positive electrode and a negative electrode.

In the figures, when an electrode assembly included in the secondary battery is a stacked type electrode assembly, an X direction is defined as a long-side direction of a stacked surface, whereas when the electrode assembly is a wound type electrode assembly, the X direction is defined as a direction along a winding axis thereof. Further, a Y direction is defined as a short-side direction of the electrode assembly when viewed in the X direction, and a Z direction is defined as a long-side direction of the electrode assembly when viewed in the X direction. In order to facilitate understanding of the invention, the size of each configuration in the figures may be illustrated to be changed from its actual size.

In the specification of the present application, the Z direction serving as a first direction may be referred to as a "height direction" of each of the secondary battery, the electrode assembly, and the case main body, the X direction serving as a second direction may be referred to as a "width direction" of each of the secondary battery, the electrode assembly, and the case main body, and the Y direction serving as a third direction may be referred to as a "thickness direction" of each of the secondary battery, the electrode assembly, and the case main body.

### (Overall Configuration of Battery)

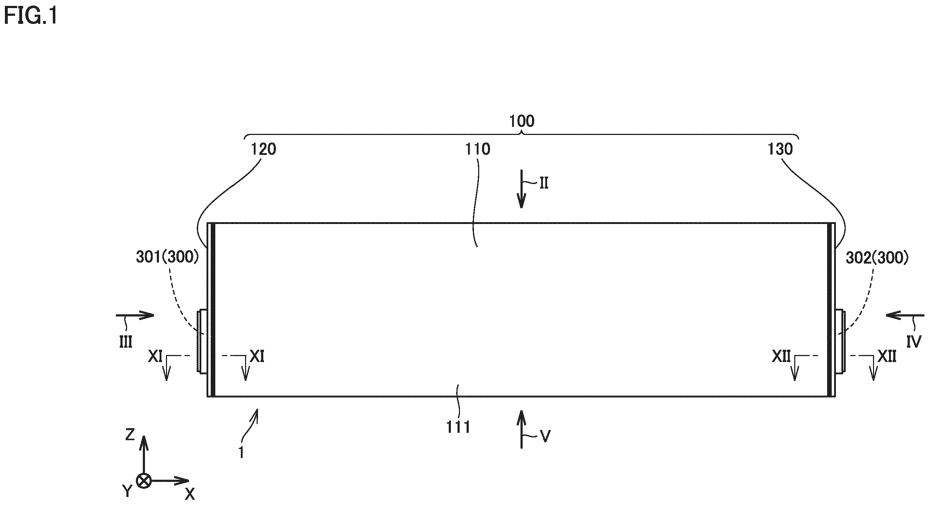

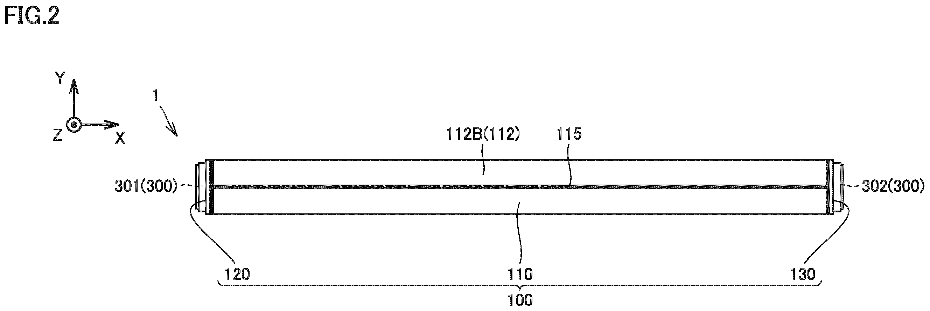

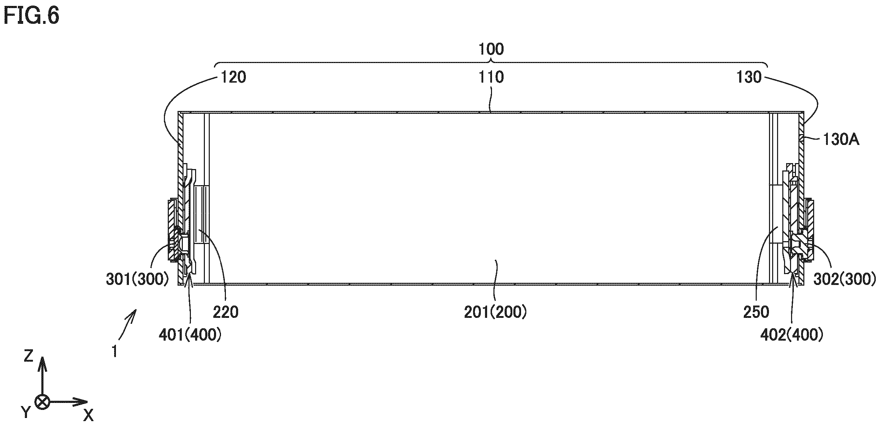

Fig. 1 is a front view of a secondary battery 1 according to an embodiment. Figs. 2 to 5 are diagrams showing states of secondary battery 1 shown in Fig. 1 when viewed in directions of arrows II, III, IV, and V respectively. Fig. 6 is a front cross sectional view of secondary battery 1 shown in Fig. 1.

Secondary battery 1 can be mounted on a battery electric vehicle (BEV), a plug-in hybrid electric vehicle (PHEV), a hybrid electric vehicle (HEV), or the like. It should be noted that the purpose of use of secondary battery 1 is not limited to the use on a vehicle.

As shown in Figs. 1 to 6, secondary battery 1 includes a case 100, an electrode assembly 200, electrode terminals 300, and current collectors 400. Case 100 includes a case main body 110, a sealing plate 120 (first sealing plate), and a sealing plate 130 (second sealing plate).

When forming a battery assembly including secondary battery 1, a plurality of secondary batteries 1 are stacked in the thickness direction of each of the plurality of secondary batteries 1. Secondary batteries 1 stacked may be restrained in the stacking direction (Y direction) by a restraint member to form a battery module, or the plurality of secondary batteries may be accommodated in a case of a battery pack without using the restraint member.

Case main body 110 is constituted of a member having a tubular shape, preferably, a prismatic tubular shape. Thus, secondary battery 1 having a prismatic shape is obtained. Case main body 110 is composed of a metal. Specifically, case main body 110 is composed of aluminum, an aluminum alloy, iron, an iron alloy, or the like.

As shown in Figs. 1 and 2, sealing plate 120 and sealing plate 130 are provided at respective end portions of the case main body. Case main body 110 can be formed to have a prismatic tubular shape in, for example, the following manner: end sides of a plate-shaped member having been bent are brought into abutment with each other (joining portion 115 illustrated in Fig. 2) and are joined together (for example, laser welding). Each of the corners of the "prismatic tubular shape" may have a shape with a curvature.

In the present embodiment, case main body 110 is formed to be longer in the width direction (X direction) of secondary battery 1 than in each of the thickness direction (Y direction) and the height direction (Z direction) of secondary battery 1. The size (width) of case main body 110 in the X direction is preferably about 30 cm or more. In this way, secondary battery 1 can be formed to have a relatively large size (high capacity). The size (height) of case main body 110 in the Z direction is preferably about 20 cm or less, more preferably about 15 cm or less, and further preferably about 10 cm or less. Thus, (low-height) secondary battery 1 having a relatively low height can be formed, thus resulting in improved ease of mounting on a vehicle, for example.

Case main body 110 includes a pair of first side surface portions 111 and a pair of second side surface portions 112. The pair of first side surface portions 111 constitute parts of the side surfaces of case 100. The pair of second side surface portions 112 constitute a bottom surface portion 112A and an upper surface portion 112B of case 100. The pair of first side surface portions 111 and the pair of second side surface portions 112 are provided to intersect each other. The pair of first side surface portions 111 and the pair of second side surface portions 112 are connected at their respective end portions. Each of the pair of first side surface portions 111 desirably has an area larger than that of each of the pair of second side surface portions 112.

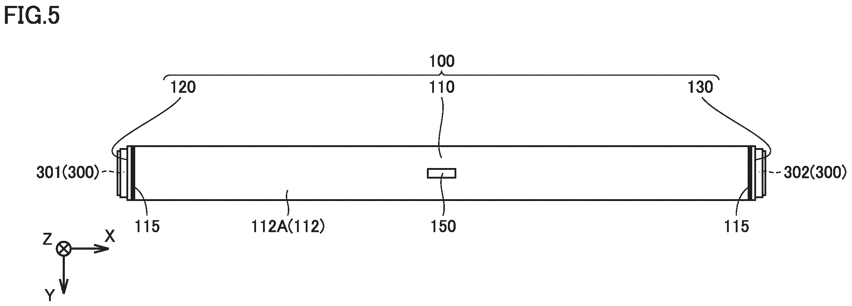

As shown in Fig. 5, a gas-discharge valve 150 is provided at bottom surface portion 112A, which is one of the pair of second side surface portions 112. In the example of Fig. 5, gas-discharge valve 150 is provided at only one location near the center of secondary battery 1 in the width direction (X direction). The shape and arrangement of gas-discharge valve 150 can be changed appropriately at bottom surface portion 112A.

The thickness of the plate-shaped member in gas-discharge valve 150 is thinner than the thickness of the plate-shaped member of case main body 110 other than gas-discharge valve 150. Thus, when the pressure in case 100 becomes equal to or more than a predetermined value, gas-discharge valve 150 is fractured prior to the other portions of case main body 110, thereby discharging the gas in case 100 to the outside.

As shown in Fig. 2, joining portion 115 is formed at upper surface portion 112B, which is the other of the pair of second side surface portions 112. Joining portion 115 extends in the width direction (X direction) of secondary battery 1. At joining portion 115, the end sides of the plate-shaped member constituting case main body 110 are joined to each other.

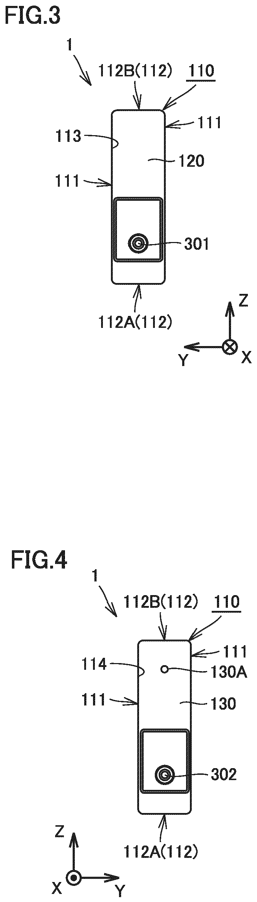

As shown in Fig. 3, an opening 113 (first opening) is provided at an end portion of case main body 110 on a first side in the X direction. Opening 113 is sealed by sealing plate 120. Each of opening 113 and sealing plate 120 has a substantially rectangular shape in which the Y direction corresponds to its short-side direction and the Z direction corresponds to its long-side direction. The substantially rectangular shape includes a rectangular shape or a generally rectangular shape such as a rectangular shape having corners each with a curvature.

Sealing plate 120 (first sealing plate) is provided with a negative electrode terminal 301. The position of negative electrode terminal 301 can be appropriately changed.

As shown in Fig. 4, an opening 114 (second opening) is provided at an end portion of case main body 110 on a second side opposite to the first side in the X direction. That is, opening 114 is located at an end portion opposite to opening 113, and openings 113 and 114 face each other. Opening 114 is sealed by sealing plate 130. Each of opening 114 and sealing plate 130 has a substantially rectangular shape in which the Y direction corresponds to its short-side direction and the Z direction corresponds to its long-side direction.

Sealing plate 130 (second sealing plate) is provided with a positive electrode terminal 302 and an injection hole 130A. The positions of positive electrode terminal 302 and injection hole 130A can be appropriately changed.

Each of sealing plate 120 and sealing plate 130 is composed of a metal. Specifically, each of sealing plate 120 and sealing plate 130 is composed of aluminum, an aluminum alloy, iron, an iron alloy, or the like.

Negative electrode terminal 301 (first electrode terminal) is electrically connected to a negative electrode of electrode assembly 200. Negative electrode terminal 301 is attached to sealing plate 120, i.e., case 100.

Positive electrode terminal 302 (second electrode terminal) is electrically connected to a positive electrode of electrode assembly 200. Positive electrode terminal 302 is attached to sealing plate 130, i.e., case 100.

Negative electrode terminal 301 is composed of a conductive material (more specifically, a metal), and can be composed of copper, a copper alloy, or the like, for example, A portion or layer composed of aluminum or an aluminum alloy may be provided at a portion of an outer surface of negative electrode terminal 301.

Positive electrode terminal 302 is composed of a conductive material (more specifically, a metal), and can be composed of aluminum, an aluminum alloy, or the like, for example.

Injection hole 130A is sealed by a sealing member (not shown). As the sealing member, for example, a blind rivet or another metal member can be used.

Electrode assembly 200 is an electrode assembly having a flat shape and having a below-described positive electrode plate and a below-described negative electrode plate stacked on each other. Specifically, electrode assembly 200 is a stacked type electrode assembly in which a plurality of positive electrode plates and a plurality of negative electrode plates are alternately stacked with below-described separators 800 being interposed therebetween. However, in the present specification, the "electrode assembly" is not limited to the stacked type electrode assembly, and may be a wound type electrode assembly in which a strip-shaped positive electrode plate and a strip-shaped negative electrode plate are wound together with a strip-shaped separator being interposed therebetween. Separator 800 can be constituted of, for example, a microporous membrane composed of polyolefin.

As shown in Fig. 6, case 100 accommodates electrode assembly 200. Fig. 6 illustrates a first electrode assembly 201 described below. First electrode assembly 201 is accommodated in case 100 such that the long-side direction thereof is parallel to the X direction.

Specifically, one or a plurality of the stacked type electrode assemblies and an electrolyte solution (electrolyte) are accommodated inside a below-described insulating sheet 700 disposed in case 100. As the electrolyte solution (non-aqueous electrolyte solution), it is possible to use, for example, a solution obtained by dissolving LiPF₆ at a concentration of 1.2 mol/L in a non-aqueous solvent obtained by mixing ethylene carbonate (EC), ethyl methyl carbonate (EMC), and dimethyl carbonate (DMC) at a volume ratio (25°C) of 30:30:40.

First electrode assembly 201 includes a main body portion having a substantially rectangular shape, a negative electrode tab group 220 (first electrode tab group), and a positive electrode tab group 250 (second electrode tab group).

The main body portion is constituted of a below-described negative electrode plate 210 and a below-described positive electrode plate 240. Negative electrode tab group 220 is located at an end portion of first electrode assembly 201 on the sealing plate 120 side with respect to the main body portion thereof in the X direction. Positive electrode tab group 250 is located at an end portion of first electrode assembly 201 on the sealing plate 130 side with respect to the main body portion thereof in the X direction.

Each of negative electrode tab group 220 and positive electrode tab group 250 is formed to protrude from a central portion of electrode assembly 200 toward sealing plate 120 or sealing plate 130.

Current collectors 400 include a negative electrode current collector 401 and a positive electrode current collector 402. Electrode assembly 200 is electrically connected to negative electrode terminal 301 and positive electrode terminal 302 through current collectors 400.

Negative electrode current collector 401 is disposed on sealing plate 120 with an insulating member composed of a resin being interposed therebetween. Negative electrode current collector 401 is electrically connected to negative electrode tab group 220 and negative electrode terminal 301. Negative electrode current collector 401 is composed of a conductive material (more specifically, a metal), and can be composed of copper, a copper alloy, or the like, for example. Details of negative electrode current collector 401 will be described later.

Positive electrode current collector 402 is disposed on sealing plate 130 with an insulating member composed of a resin being interposed therebetween. Positive electrode current collector 402 is electrically connected to positive electrode tab group 250 and positive electrode terminal 302. Positive electrode current collector 402 is composed of a conductive material (more specifically, a metal), and can be composed of aluminum, an aluminum alloy, or the like, for example. Details of positive electrode current collector 402 will be described later.

### (Configuration of Electrode Assembly 200)

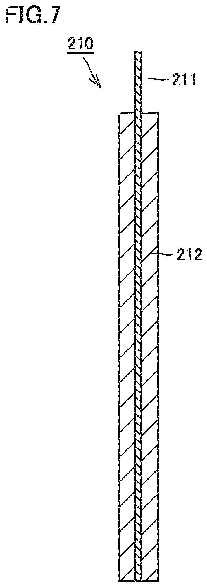

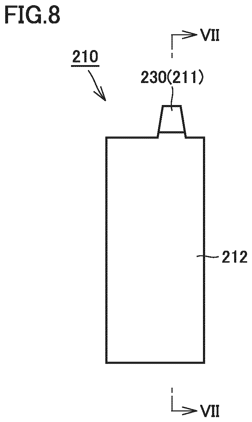

Fig. 7 is a cross sectional view of negative electrode plate 210 (cross sectional view along VII-VII in Fig. 8), and Fig. 8 is a front view showing negative electrode plate 210. As shown in Fig. 7, a negative electrode active material layer 212 is formed on a negative electrode core body 211.

As shown in Fig. 8, a negative electrode tab 230 (first electrode tab) constituted of negative electrode core body 211 is provided at one end portion, in the width direction, of negative electrode plate 210. When negative electrode plates 210 are stacked, a plurality of negative electrode tabs 230 are stacked to form negative electrode tab group 220. The length of each of the plurality of negative electrode tabs 230 in the plurality of negative electrode plates 210 in the protruding direction is appropriately adjusted in consideration of the state in which negative electrode tab group 220 is connected to negative electrode current collector 401. The shape of negative electrode tab 230 is not limited to the one illustrated in Fig. 8.

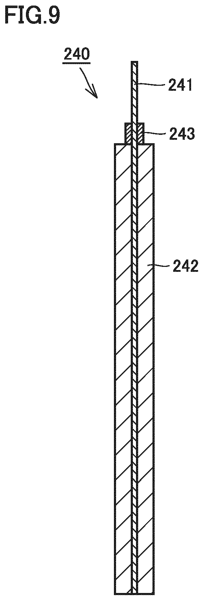

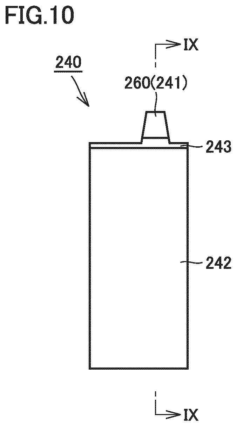

Fig. 9 is a cross sectional view of positive electrode plate 240 (cross sectional view along IX-IX in Fig. 10), and Fig. 10 is a front view showing positive electrode plate 240. As shown in Fig. 9, a positive electrode active material layer 242 is formed on a positive electrode core body 241.

As shown in Fig. 10, a positive electrode tab 260 (second electrode tab) constituted of positive electrode core body 241 is provided at one end portion, in the width direction, of positive electrode plate 240 formed. When positive electrode plates 240 are stacked, a plurality of positive electrode tabs 260 are stacked to form positive electrode tab group 250. The length of each of positive electrode tabs 260 in the plurality of positive electrode plates 240 in the protruding direction is appropriately adjusted in consideration of the state in which positive electrode tab group 250 is connected to positive electrode current collector 402. The shape of positive electrode tab 260 is not limited to the one illustrated in Fig. 10.

A positive electrode protective layer 243 is provided at the root of positive electrode tab 260. Positive electrode protective layer 243 may not necessarily be provided at the root of positive electrode tab 260.

In a typical example, the thickness of (one) negative electrode tab 230 is smaller than the thickness of (one) positive electrode tab 260. In this case, the thickness of negative electrode tab group 220 is smaller than the thickness of positive electrode tab group 250.

(Connection Structure between Electrode Assembly 200 and Current Collector 400)

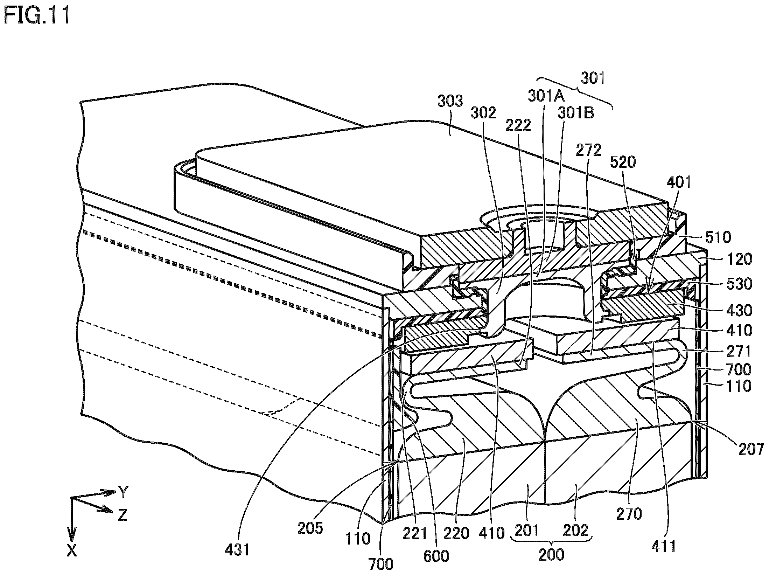

Fig. 11 is a cross sectional view of the secondary battery shown in Fig. 1 along XI-XI. As shown in Fig. 11, electrode assembly 200 includes first electrode assembly 201 and a second electrode assembly 202. Each of first electrode assembly 201 and second electrode assembly 202 includes a positive electrode and a negative electrode. Electrode assembly 200 may be constituted of three or more electrode assemblies.

Electrode assembly 200 is formed by overlapping first electrode assembly 201 and second electrode assembly 202 with each other. First electrode assembly 201 and second electrode assembly 202 are arranged side by side in the thickness direction (Y direction) of each of first electrode assembly 201 and second electrode assembly 202.

First electrode assembly 201 includes negative electrode tab group 220. Negative electrode tab group 220 is electrically connected to one current collector 410 (negative electrode current collector) at its first end portion 205 in the X direction. Second electrode assembly 202 includes a negative electrode tab group 270. Negative electrode tab group 270 is electrically connected to the other current collector 410 (negative electrode current collector) at its third end portion 207 in the X direction.

Negative electrode tab group 220 has a curved portion 221 and a tip portion 222. Curved portion 221 is a portion at which negative electrode tab group 220 is curved on the side, on which the first electrode is connected, with respect to tip portion 222.

Negative electrode tab group 270 has a curved portion 271 and a tip portion 272. Curved portion 271 is a portion at which negative electrode tab group 270 is curved on the side, on which the first electrode is connected, with respect to tip portion 272.

Negative electrode tab group 220 and negative electrode tab group 270 are curved in opposite directions such that tip portions 222, 272 are close to each other. Tip portions 222, 272 are separated from each other in the present embodiment; however, it is not limited to this configuration, and tip portions 222, 272 may be in contact with each other.

Negative electrode current collector 401 electrically connects negative electrode terminal 301 to negative electrode tab group 220 and negative electrode tab group 270. Negative electrode current collector 401 in the present embodiment is connected to negative electrode terminal 301 between electrode assembly 200 and sealing plate 120.

Negative electrode current collector 401 includes two current collectors 410 and a current collector 430.

Each of current collectors 410 is a plate-shaped member. Current collector 410 has a long-side direction in the Z direction and a short-side direction in the Y direction. Current collector 430 is a plate-shaped member. Current collector 430 has a long-side direction in the Z direction and a short-side direction in the Y direction. Current collector 410 and current collector 430 are arranged side by side in the X direction. In this way, current collector 410 and current collector 430 are constituted of separate components.

Each of negative electrode tab groups 220, 270 is joined to current collector 410 at a first joining portion 411 described later. First joining portion 411 may be formed by ultrasonic welding, resistance welding, laser welding, swaging, or the like, for example. In the present embodiment, negative electrode tab group 220 and one current collector 410 are joined by ultrasonic joining, and negative electrode tab group 270 and the other current collector 410 are joined by ultrasonic joining, for example.

Current collector 430 is electrically connected to one current collector 410 and the other current collector 410. Current collector 430 is connected to negative electrode terminal 301 at a second joining portion 431. The connection between current collector 430 and negative electrode terminal 301 can be formed by swaging and/or welding, for example.

Negative electrode terminal 301 is exposed to the outside of sealing plate 120. Negative electrode terminal 301 is connected to a plate-shaped member 303. It should be noted that negative electrode terminal 301 preferably includes a region 301A composed of copper or a copper alloy and a region 301B composed of aluminum or an aluminum alloy, and region 301A composed of copper or a copper alloy is preferably connected to current collector 430.

Plate-shaped member 303 is located on the outer side with respect to sealing plate 120. Plate-shaped member 303 is disposed along sealing plate 120. Plate-shaped member 303 has electric conductivity. Plate-shaped member 303 is disposed to secure an area of connection with a bus bar or the like that electrically connects secondary battery 1 and another secondary battery adjacent thereto. The connection between negative electrode terminal 301 and plate-shaped member 303 can be formed by, for example, laser welding or the like.

An insulating member 510 is disposed between plate-shaped member 303 and sealing plate 120. An insulating member 520 is disposed between negative electrode terminal 301 and sealing plate 120. An insulating member 530 is disposed between current collector 430 and sealing plate 120.

It should be noted that negative electrode terminal 301 may be electrically connected to sealing plate 120. Further, sealing plate 120 may function as negative electrode terminal 301.

A below-described spacer 600 (first spacer) is disposed between sealing plate 120 and the main body portion (negative electrode tab group 220 is not included) of electrode assembly 200. Spacer 600 is composed of a resin member having an insulating property. Negative electrode tab group 220 passes internal to spacer 600, thereby protecting negative electrode tab group 220 by spacer 600. It should be noted that it is also possible to employ a configuration in which spacer 600 (first spacer) is not provided.

Insulating sheet 700 (electrode assembly holder) composed of a resin is disposed between electrode assembly 200 and case main body 110. Insulating sheet 700 may be composed of, for example, a resin. More specifically, the material of insulating sheet 700 is, for example, polypropylene (PP), polyethylene terephthalate (PET), polyphenylene sulfide (PPS), polyimide (PI), or polyolefin (PO).

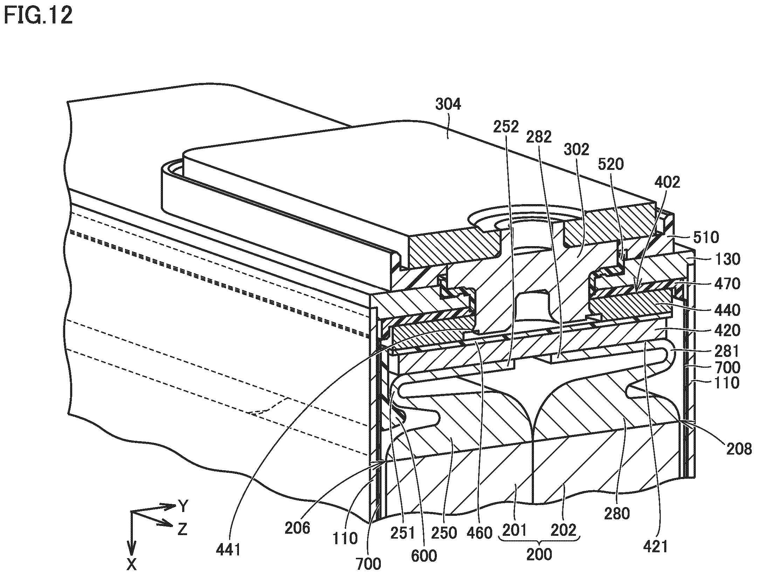

Fig. 12 is a cross sectional view of the secondary battery shown in Fig. 1 along XII-XII. The connection structure between electrode assembly 200 and current collector 400 on the positive electrode side of secondary battery 1 according to the present embodiment is different from that of the configuration on the negative electrode side in the following point: a portion corresponding to one current collector 410 and the other current collector 410 on the negative electrode side is constituted of a single component.

First electrode assembly 201 includes positive electrode tab group 250. Positive electrode tab group 250 is electrically connected to current collector 420 (positive electrode current collector) at its second end portion 206 in the X direction. Second electrode assembly 202 includes a positive electrode tab group 280. Positive electrode tab group 280 is electrically connected to current collector 420 (positive electrode current collector) at its fourth end portion 208 in the X direction.

Positive electrode tab group 250 has a curved portion 251 and a tip portion 252. Curved portion 251 is a portion at which positive electrode tab group 250 is curved on the side, on which the second electrode is connected, with respect to tip portion 252.

Positive electrode tab group 280 has a curved portion 281 and a tip portion 282. Curved portion 281 is a portion at which positive electrode tab group 280 is curved on the side, on which the second electrode is connected, with respect to tip portion 282.

Positive electrode tab group 250 and positive electrode tab group 280 are curved in opposite directions such that tip portions 252, 282 are close to each other. Tip portions 252, 282 are separated from each other in the present embodiment; however, it is not limited to this configuration, and tip portions 252, 282 may be in contact with each other.

Positive electrode current collector 402 electrically connects positive electrode terminal 302 to positive electrode tab group 250 and positive electrode tab group 280. Positive electrode current collector 402 in the present embodiment is connected to positive electrode terminal 302 between electrode assembly 200 and sealing plate 130.

Positive electrode current collector 402 includes current collector 420 (first current collecting member) and a current collector 450 (second current collecting member). A plate 460 is interposed as an insulating member between current collector 420 (first current collecting member) and current collector 450 (second current collecting member). Current collector 420 and current collector 450 are electrically connected to each other at a cross section different from the cross section shown in the figure.

Current collector 420 is a plate-shaped member. Current collector 420 has a long-side direction in the Z direction and a short-side direction in the Y direction. Current collector 420 is constituted of a single component in one piece.

Positive electrode tab group 250 and positive electrode tab group 280 are joined, at a first joining portion 421, to current collector 420 constituted of the single component. First joining portion 421 can be formed by ultrasonic welding, resistance welding, laser welding, swaging, or the like, for example. In the present embodiment, positive electrode tab group 250 and positive electrode tab group 280 are joined to current collector 420 by ultrasonic joining, for example.

Current collector 440 is electrically connected to current collector 420. Current collector 440 is connected to positive electrode terminal 302 at a second joining portion 441. The connection between current collector 440 and positive electrode terminal 302 can be formed by swaging and/or welding, for example.

Positive electrode terminal 302 is provided to be exposed to the outside of sealing plate 130 and reach current collector 440 of positive electrode current collector 402 provided on the inner surface side of sealing plate 130. Positive electrode terminal 302 is connected to a plate-shaped member 304.

Plate-shaped member 304 is located on the outer side with respect to sealing plate 130. Plate-shaped member 304 is disposed along sealing plate 130. Plate-shaped member 304 has electric conductivity. Plate-shaped member 304 is disposed to secure an area of connection with a bus bar or the like that electrically connects secondary battery 1 and another secondary battery adjacent thereto. The connection between positive electrode terminal 302 and plate-shaped member 304 may be formed by, for example, laser welding or the like.

An insulating member 510 is disposed between plate-shaped member 304 and sealing plate 130. An insulating member 520 is disposed between positive electrode terminal 302 and sealing plate 130. An insulating member 470 is disposed between current collector 440 and sealing plate 130.

It should be noted that positive electrode terminal 302 may be electrically connected to sealing plate 130. Further, sealing plate 130 may function as positive electrode terminal 302.

### (Manufacturing Process for Secondary Battery 1)

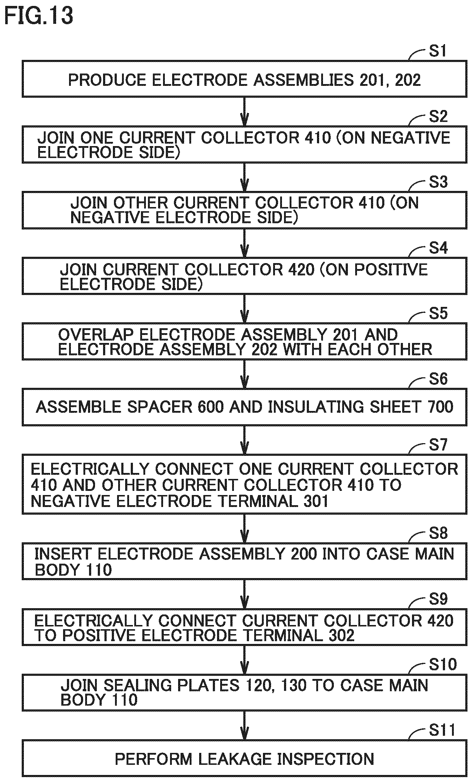

Hereinafter, a method of manufacturing the secondary battery according to the present embodiment will be described. Fig. 13 is a flowchart showing the method of manufacturing the secondary battery according to one embodiment.

As shown in Fig. 13, in the method of manufacturing the secondary battery according to the present embodiment, first, first electrode assembly 201 and second electrode assembly 202 are produced (step S1). Parts of the tips of negative electrode tab group 220, positive electrode tab group 250, negative electrode tab group 270, and positive electrode tab group 280 are preferably cut such that they have the same tip length when bundled.

Then, negative electrode tab group 220 is joined to one current collector 410 (step S2). Next, negative electrode tab group 270 is joined to the other current collector 410 (step S3). Each of negative electrode tab groups 220, 270 is joined to current collector 410 at first joining portion 411.

Next, each of positive electrode tab group 250 and positive electrode tab group 280 is joined to current collector 420 (step S4). Each of positive electrode tab groups 250, 280 is joined to current collector 420 at first joining portion 421.

The order of the steps of joining current collectors 410 and current collector 420 to first electrode assembly 201 and second electrode assembly 202 is not limited to the one described above, and the order may be changed.

Next, first electrode assembly 201 and second electrode assembly 202 are overlapped with each other by folding positive electrode tab group 250 and positive electrode tab group 280 in the thickness direction (Y direction) of case main body 110 (step S5).

First electrode assembly 201 and second electrode assembly 202 may be directly overlapped with each other, or another member may be disposed between first electrode assembly 201 and second electrode assembly 202. Further, first electrode assembly 201 and second electrode assembly 202 may or may not be fixed by a tape or the like.

Then, one current collector 410 and the other current collector 410 are electrically connected to negative electrode terminal 301 via current collector 430 (step S7). It should be noted that step S7 can be performed before step S6.

Next, after overlapping first electrode assembly 201 and second electrode assembly 202 with each other, first electrode assembly 201 and second electrode assembly 202 are inserted into case main body 110 via opening 113 with the current collector 420 side being inserted first (step S8).

Then, current collector 420 is electrically connected to positive electrode terminal 302 (step S9). Further, sealing plate 120 and sealing plate 130 are joined to case main body 110 (step S10). Thus, first electrode assembly 201 and second electrode assembly 202 are accommodated in case 100.

After the above-described steps, an inspection such as a leakage inspection is performed (step S11). After the leakage inspection, secondary battery 1 is dried to remove moisture in case 100. Then, the electrolyte solution is injected into case 100 through injection hole 130A. Thereafter, charging is performed to result in release of gas. For performing the charging to result in release of gas, injection hole 130A may be temporarily sealed. Thereafter, injection hole 130A is sealed, thereby completing secondary battery 1.

(Arrangement of First Joining Portions 411, 421 and Second Joining Portions 431, 441)

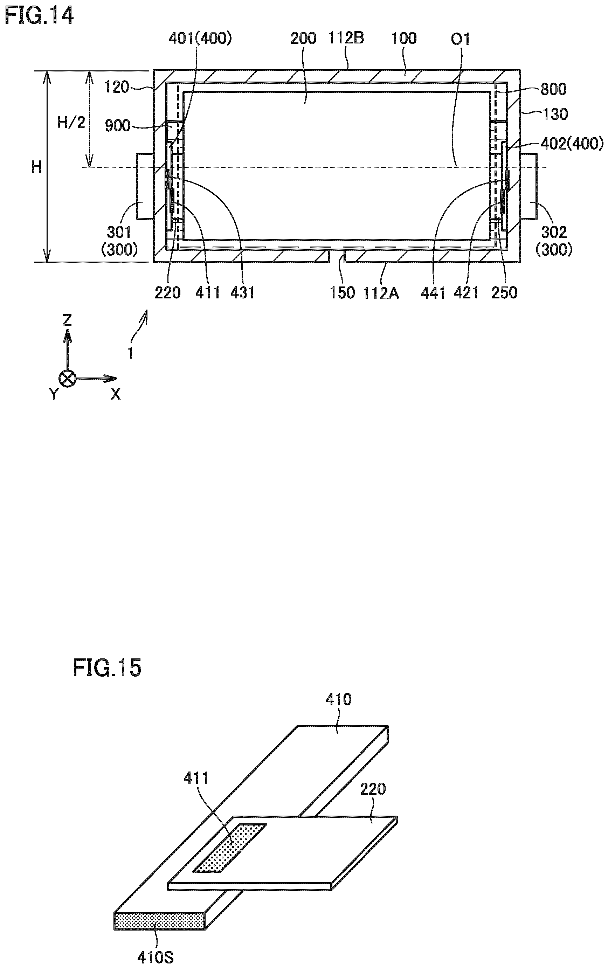

Fig. 14 is a diagram schematically showing an exemplary arrangement of first joining portions 411, 421 and second joining portions 431, 441 in secondary battery 1.

As shown in Fig. 14, electrode assembly 200, current collectors 400, and electrolyte solution 900 are accommodated in the inner space of case 100. Electrode terminals 300 are provided on the outer surface of case 100.

The outer surface of case 100 includes: sealing plates 120, 130 (first surface) extending in the direction of the Y-Z plane including the Z direction (first direction); and bottom surface portion 112A (second surface) connected to one end portion of each of sealing plates 120, 130 in the Z direction and substantially orthogonal to sealing plates 120, 130.

In the example of Fig. 14, each of first joining portions 411, 421, which join electrode assembly 200 and current collectors 400, is eccentrically located on the bottom surface portion 112A side in the Z direction. Similarly, each of second joining portions 431, 441, which join current collectors 400 and electrode terminals 300, is eccentrically located on the bottom surface portion 112A side in the Z direction.

More specifically, each of first joining portions 411, 421 and second joining portions 431, 441 is located in a region on the bottom surface portion 112A side with respect to the center (O1 in Fig. 14) of case 100 in the height direction.

First joining portions 411, 421 and second joining portions 431, 441 are formed by joining the portions of the plurality of conductive members by welding, swaging, or the like. Therefore, an electric conduction area at each of first joining portions 411, 421 and second joining portions 431, 441 is likely to be relatively smaller than that of the other portion. Therefore, the temperature of electrode assembly 200 is likely to be increased in the vicinity of each of first joining portions 411, 421 and second joining portions 431, 441.

When the temperature of electrode assembly 200 is increased excessively, electrolyte solution 900 is gasified to increase the internal pressure of case 100. When the internal pressure of case 100 becomes equal to or more than a predetermined value, gas-discharge valve 150 is fractured. On this occasion, it is required to securely fracture gas-discharge valve 150 while avoiding a portion other than gas-discharge valve 150 from being fractured.

In secondary battery 1 according to the present embodiment, since each of first joining portions 411, 421 and second joining portions 431, 441 is eccentrically located on the bottom surface portion 112A side, first joining portions 411, 421 and second joining portions 431, 441 are located at positions close to gas-discharge valve 150. Therefore, since the portion at which the temperature of electrode assembly 200 is likely to be increased and gas-discharge valve 150 can be close to each other, it is possible to suppress fracture at an unintended position when the temperature is increased.

When secondary battery 1 is formed into a module, first side surface portion 111 of case main body 110 is in contact with a first side surface portion 111 of an adjacent secondary battery 1, with the result that expansion thereof is less likely to occur. Therefore, a load due to increased gas pressure is likely to be concentrated on sealing plates 120, 130 and second side surface portion 112 (bottom surface portion 112A and upper surface portion 112B) of case main body 110. From the viewpoint of securely suppressing fracture of sealing plates 120, 130 (first surface) among them, the thickness of each of sealing plates 120, 130 (first plate-shaped portion) is preferably larger than the thickness of case main body 110 (second plate-shaped portion) constituting bottom surface portion 112A (second surface) (more preferably, larger than a thickness that is about three times as large as the thickness of case main body 110). However, the scope of the present technology is not limited thereto.

When secondary battery 1 shown in Fig. 14 is mounted on a vehicle, secondary battery 1 can be mounted such that the bottom surface portion 112A side of case 100 is located on the lower side. Since bottom surface portion 112A at which gas-discharge valve 150 is formed is thus located on the lower side, electrolyte solution 900 can be preferentially discharged from gas-discharge valve 150 that has been fractured. Therefore, increased internal pressure due to gasification of electrolyte solution 900 can be effectively suppressed. However, the mounted structure of secondary battery 1 according to the present technology is not limited thereto.

More specifically, when the total height of case 100 (distance from bottom surface portion 112A to upper surface portion 112B) is defined as H, each of first joining portions 411, 421 and second joining portions 431, 441 is preferably formed in a region at a distance of about 1/10H or more and 4/10H or less from bottom surface portion 112A. However, the scope of the present technology is not limited thereto.

In secondary battery 1 shown in Fig. 14, electrode assembly 200 is the stacked type electrode assembly, and each separator 800 is provided to protrude to the bottom surface portion 112A (second surface) side and the upper surface portion 112B (third surface) side with respect to negative electrode plate 210 and positive electrode plate 240 in the Z direction. A protruding amount of separator 800 with respect to each of negative electrode plate 210 and positive electrode plate 240 in the Z direction is larger on the bottom surface portion 112A side than on the upper surface portion 112B side.

Since separator 800 protrudes with respect to negative electrode plate 210 and positive electrode plate 240, a flow path for electrolyte solution 900 can be formed between the plurality of separators 800. Since each separator 800 protrude relatively greatly on the bottom surface portion 112A side, a large flow path area for electrolyte solution 900 can be secured on the bottom surface portion 112A side to increase fluidity of electrolyte solution 900, thereby facilitating to discharge electrolyte solution 900 from gas-discharge valve 150. By accelerating the discharging of electrolyte solution 900, increased internal pressure of case 100 can be effectively suppressed. However, the scope of the present technology is not limited thereto.

Fig. 14 shows an example in which the whole of each of first joining portions 411, 421 and second joining portions 431, 441 is located in the region on the bottom surface portion 112A side with respect to the center (O1 in Fig. 14) of case 100 in the height direction; however, the scope of the present technology is not limited thereto, and also include a case where a portion of each of first joining portions 411, 421 and the second joining portions 431, 441 is located on the upper surface portion 112B side but a portion (preferably 60% or more, more preferably 70% or more, and further preferably 80% or more or 90% or more) thereof that is more than the half of each of first joining portions 411, 421 and second joining portions 431, 441 (projection area thereof onto each of sealing plates 120, 130) is located on the bottom surface portion 112A side.

Fig. 14 illustratively shows that both of each of first joining portions 411, 421 and each of second joining portions 431, 441 are eccentrically located on the bottom surface portion 112A side; however, the scope of the present technology is not limited thereto, and also includes a case where only one of each of first joining portions 411, 421 and each of second joining portions 431, 441 is eccentrically located on the bottom surface portion 112A side.

Fig. 14 illustratively shows that each of first joining portions 411, 421 and each of second joining portions 431, 441 are eccentrically located on the bottom surface portion 112A side on both the negative electrode side and the positive electrode side; however, the scope of the present technology is not limited thereto, and also includes a case where at least one of each of first joining portions 411, 421 and each of second joining portions 431, 441 is eccentrically located on the bottom surface portion 112A side on only one of the negative electrode side and the positive electrode side.

Further, in the present embodiment, it has been illustratively described that negative electrode tab groups 220, 270 and positive electrode tab groups 250, 280 are joined to current collectors 400; however, the scope of the present technology is not limited thereto, and an electrode assembly having no tab portion may be used.

Fig. 15 is a perspective view showing a first joining portion 411 according to one example. In the example of Fig. 15, first joining portion 411 is formed by welding. In one example, an electric conduction area of first joining portion 411 (welded portion) is smaller than an area that is about 0.3 times as large as an electric conduction area of current collector 410 (area of a cross section 410S in Fig. 15).

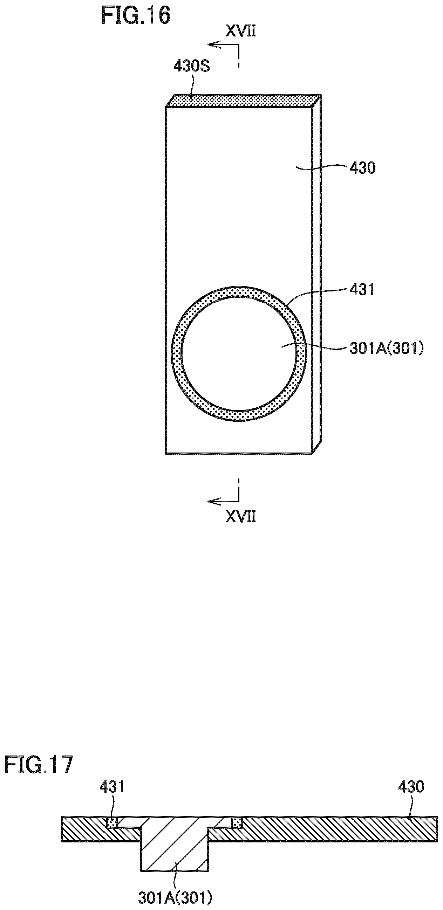

Fig. 16 is a perspective view showing a second joining portion 431 according to one example, and Fig. 17 is a cross sectional view along XVII-XVII of Fig. 16. In the example of each of Figs. 16 and 17, second joining portion 431 is formed by welding in the peripheral direction. In one example, an electric conduction area at second joining portion 431 (welded portion) is smaller than an area that is about 0.2 times as large as an electric conduction area of current collector 430 (area of a cross section 430S in Fig. 16).

Although each of Figs. 15 to 17 illustratively shows that the cross sectional area of each of current collectors 410, 430 is unchanged, the cross sectional area of each of current collectors 410, 430 may be changed in the length direction. In this case, the minimum value of the cross sectional area of each of current collectors 410, 430 at a portion other than each of first joining portion 411 and second joining portion 431 in the cross sectional area that is changed in the length direction is the "electric conduction area of each of current collectors 410, 430".

When the electric conduction area of each of first joining portion 411 and second joining portion 431 is smaller than the electric conduction area of each of current collectors 410, 430 as in the examples of Figs. 15 to 17, the temperature of electrode assembly 200 is likely to be increased around each of first joining portion 411 and second joining portion 431. In secondary battery 1 according to the present embodiment, since first joining portion 411 and second joining portion 431 are formed at the positions close to gas-discharge valve 150, gas-discharge valve 150 can be securely fractured when the temperature of electrode assembly 200 is increased.

However, the scope of the present technology is not limited to those illustrated in Figs. 15 to 17.

In the battery according to the present embodiment, since at least one of the first joining portion and the second joining portion is eccentrically located on the second surface side in the first direction, the at least one of the first joining portion and the second joining portion can be close to the gas-discharge valve. At each of the first joining portion and the second joining portion, the electric conduction area is likely to be small and the temperature of the electrode assembly located in the vicinity thereof is likely to be increased. According to the present technology, since the portion at which the temperature of the electrode assembly is likely to increased and the gas-discharge valve can be close to each other, fracture at an unintended position can be suppressed when the temperature is increased, thereby providing a battery having high reliability.

In the mounted structure of the battery according to the present embodiment, since the second surface at which the gas-discharge valve is formed is disposed on the lower side, the electrolyte solution can be preferentially discharged from the gas-discharge valve that has been fractured. As a result, increased internal pressure due to gasification of the electrolyte solution can be effectively suppressed, thereby further improving the reliability of the battery.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A battery (1) comprising:
an electrode assembly (200); and
a case (100) that accommodates the electrode assembly (200), wherein
the case (100) has an outer surface and a gas-discharge valve (150), the outer surface including a first surface (120, 130) and a second surface (112A), the first surface (120, 130) extending in a direction of a plane including a first direction, the second surface (112A) being connected to one end portion of the first surface (120, 130) in the first direction, the second surface (112A) being substantially orthogonal to the first surface (120, 130), the gas-discharge valve (150) being provided at the second surface (112A),
the battery (1) further comprising:
an electrode terminal (300) provided on an outer side with respect to the first surface (120, 130) of the case (100); and
a current collector (400) provided on an inner side with respect to the first surface (120, 130) of the case (100), wherein
the electrode assembly (200) and the current collector (400) are joined at a first joining portion (411, 421),
the current collector (400) and the electrode terminal (300) are joined at a second joining portion (431, 441), and
at least one of the first joining portion (411, 421) and the second joining portion (431, 441) is eccentrically located on the second surface (112A) side in the first direction.

2. The battery according to claim 1, wherein the gas-discharge valve (150) is provided at only one location at a center of the second surface (112A) in a second direction substantially orthogonal to the first surface (120, 130).

3. The battery according to claim 1, wherein
the electrode assembly (200) has a main body portion and a tab portion (230, 260) protruding from the main body portion toward the first surface (120, 130) at an end portion of the electrode assembly (200) in a second direction substantially orthogonal to the first surface (120, 130), and
the first joining portion (411, 421) is formed between the tab portion (230, 260) and the current collector (400).

4. The battery according to claim 3, wherein the first joining portion (411, 421) is formed by laser welding.

5. The battery according to claim 3 or 4, wherein the second joining portion (431, 441) is formed by swaging.

6. The battery according to any one of claims 1 to 5, wherein the electrode assembly (200) includes a positive electrode (240), a negative electrode (210) stacked on the positive electrode (240), and a separator (800) provided between the positive electrode (240) and the negative electrode (210).

7. The battery according to claim 6, wherein
the outer surface of the case (100) further includes a third surface (112B) connected to the other end portion of the first surface (120, 130) in the first direction and facing the second surface (112A) in the first direction,
the separator (800) is provided to protrude to the second surface (112A) side and the third surface (112B) side with respect to the positive electrode (240) and the negative electrode (210) in the first direction, and
a protruding amount of the separator (800) with respect to each of the positive electrode (240) and the negative electrode (210) in the first direction is larger on the second surface (112A) side than on the third surface (112B) side.

8. The battery according to any one of claims 1 to 6, wherein
the outer surface of the case (100) further includes a third surface (112B) connected to the other end portion of the first surface (120, 130) in the first direction and facing the second surface (112A) in the first direction, and
when a distance between the second surface (112A) and the third surface (112B) in the first direction is defined as H, the first joining portion (411, 421) is formed in a region at a distance of 1/10H or more and 4/10H or less from the second surface (112A) in the first direction.

9. The battery according to any one of claims 1 to 8, wherein an electric conduction area at the first joining portion (411, 421) is smaller than an area that is 0.3 times as large as an electric conduction area of the current collector (400).

10. The battery according to any one of claims 1 to 8, wherein an electric conduction area at the second joining portion (431, 441) is smaller than an area that is 0.2 times as large as an electric conduction area of the current collector (400).

11. The battery according to any one of claims 1 to 10, wherein in the case (100), a thickness of a first plate-shaped portion (120, 130) constituting the first surface (120, 130) is larger than a thickness that is three times as large as a thickness of a second plate-shaped portion (110) constituting the second surface (112A).

12. A mounted structure of the battery according to any one of claims 1 to 11, wherein the second surface (112A) of the case (100) is disposed on a lower side.
